# EUROPEAN PATENT APPLICATION

(11) **EP 4 510 255 A1**
(43) Date of publication of application: **19.02.2025**
(21) Application number: 22962353.3
(22) Date of filing: 19.10.2022
(51) Int. Cl.: H01M 10/04, C09J 7/29

(54) **EXPANDING ADHESIVE TAPE FOR BATTERY PACKAGING, PREPARATION METHOD THEREFOR, APPLICATION THEREOF, SECONDARY BATTERY, AND ELECTRICAL APPARATUS**

(71) Applicant: Contemporary Amperex Technology Co., Limited, Ningde, Fujian 352100 (CN)
(72) Inventor: ZHAO, Liya, Ningde, Fujian 352100 (CN); WANG, Long, Ningde, Fujian 352100 (CN); LIU, Huihui, Ningde, Fujian 352100 (CN)
(74) Representative: Kraus & Lederer PartGmbB
(86) International application number: PCT/CN2022/126080
(87) International publication number: WO 2024/082162

(57) **Abstract**

This application provides an expansion tape 7 for battery packaging, where the expansion tape 7 includes a substrate 71, an expansion layer 72, and a primer layer 73. The substrate 71 has opposite first surface and second surface. The expansion layer 72 is provided on the first surface of the substrate 71. The expansion layer 72 includes an organic adhesive and a temperature expansion material. The temperature expansion material is a material capable of volume expansion after heat treatment. The primer layer 73 is provided on the second surface of the substrate 71. The primer layer 73 has adhesion.

## Description

### TECHNICAL FIELD

This application relates to the field of secondary batteries and specifically to an expansion tape for battery packaging, a preparation method and application thereof, a secondary battery, and an electric apparatus.

### BACKGROUND

With the rapid development of the electric vehicle industry, the proportion of secondary batteries such as lithium-ion batteries in the application of energy storage power supply is increasing year by year. Therefore, the research on high-power secondary batteries has gradually become intense. Some emerging fields put forward higher requirements on secondary batteries. At present, the most widely used high-power traction batteries are hard shell batteries. However, as the energy density becomes higher, a negative electrode plate expands due to charging and discharging during long-term storage and cycling of a battery cell, and bursts a housing in severe cases, causing safety accidents. Therefore, the battery pack margin should not be too high, such that there will be a certain gap between the housing and the bare battery cell. An expansion tape can fill such gap, alleviating the expansion stress of the electrode plate, and enhancing the safety performance of the battery. However, the conventional expansion tape has a small expansion ratio, which makes it difficult to meet the requirement for low battery pack margin.

### SUMMARY

In view of the preceding problems, this application provides an expansion tape for battery packaging, a preparation method and application thereof, a secondary battery, and an electric apparatus, so as to meet the requirement for low battery pack margin.

According to an aspect of this application, an expansion tape for battery packaging is provided, where the expansion tape includes:
a substrate having opposite first surface and second surface;
an expansion layer provided on the first surface of the substrate, where the expansion layer includes an organic adhesive and a temperature expansion material, the temperature expansion material being a material capable of volume expansion after heat treatment; and
a primer layer provided on the second surface of the substrate, where the primer layer has adhesion.

The expansion tape for battery packaging in the embodiments of this application includes a substrate, an expansion layer, and a primer layer, the primer layer includes an organic adhesive and a temperature expansion material, the organic adhesive has swelling performance, and the temperature expansion material can expand in volume after heat treatment. The expansion tape has a large expansion ratio, and thus can fill a gap between an electrode assembly and a housing for packaging of a secondary battery, so as to meet the requirement for low battery pack margin.

In some embodiments, a maximum ratio of an expanded thickness of the expansion tape to an initial unexpanded thickness of the expansion tape is greater than or equal to 5, and optionally ranges from 5 to 10. With the maximum ratio of the expanded thickness of the expansion tape to the initial unexpanded thickness of the expansion tape in the foregoing range, the expansion tape has a larger expansion ratio and is capable of substantially expanding to fill the gap between the electrode assembly and the housing.

In some embodiments, the initial unexpanded thickness of the expansion tape ranges from 100 µm to 500 µm, and optionally from 150 µm to 300 µm. With the initial unexpanded thickness of the expansion tape in the foregoing range, the expansion tape expanded can fill most of the gap between the electrode assembly and the housing, which can solve the problem of filling the gap between the electrode assembly and housing of the traction battery having low pack margin.

In some embodiments, the expanded thickness of the expansion tape ranges from 1 mm to 5 mm, and optionally from 1 mm to 3 mm. With the expanded thickness of the expansion tape in the foregoing range, the expansion tape expanded can fill most of the gap between the electrode assembly and the housing, which can solve the problem of filling the gap between the electrode assembly and housing of the traction battery having low pack margin.

In some embodiments, a compression ratio of the expansion tape expanded ranges from 10% to 75%, the compression ratio being a proportion of thickness reduction of the expansion tape expanded under predetermined stress. With the compression ratio of the expansion tape expanded in the foregoing range, the expansion tape can be compressed by a force during battery cycling, relieving the expansion stress of the electrode assembly during cycling.

In some embodiments, a ratio of a thickness of the substrate to the initial unexpanded thickness of the expansion tape is (2-10):100, and optionally (3-6):100. With the ratio of the thickness of the substrate to the initial unexpanded thickness of the expansion tape in the foregoing range, the expansion tape has suitable mechanical strength.

Optionally, the thickness of the substrate ranges from 5 µm to 30 µm, and optionally from 5 µm to 15 µm.

In some embodiments, a ratio of an initial unexpanded thickness of the expansion layer to the initial unexpanded thickness of the expansion tape is (75-97):100, and optionally (90-97):100. With the ratio of the initial unexpanded thickness of the expansion layer to the initial unexpanded thickness of the expansion tape in the foregoing range, the expansion tape has a larger expansion ratio.

Optionally, the thickness of the expansion layer ranges from 75 µm to 450 µm, and optionally from 100 µm to 200 µm.

In some embodiments, a ratio of a thickness of the primer layer to an initial unexpanded thickness of the expansion tape is (1-5):100, and optionally (1.5-3):100; and
optionally, the thickness of the primer layer ranges from 2.5 µm to 20 µm, and optionally from 2.5 µm to 7.5 µm.

In some embodiments, a mass ratio of the organic adhesive to the temperature expansion material in the expansion layer is (50-80):(20-50); and
optionally, in the expansion layer, a mass percentage of the organic adhesive ranges from 50% to 80%, and a mass percentage of the temperature expansion material ranges from 20% to 50%. With the percentages of the organic adhesive and temperature expansion material in the expansion layer in the foregoing ranges, the expansion layer has both better swelling performance and temperature expansion performance, and the expansion tape has a larger expansion ratio and is not prone to overflow of adhesive.

In some embodiments, a swelling ratio of the organic adhesive ranges from 50% to 200%, the swelling ratio being a ratio of a volume of the organic adhesive placed in electrolyte to a volume of the dried organic adhesive. With the swelling ratio of the organic adhesive in the foregoing range, the organic adhesive in the expansion layer can absorb the electrolyte to expand during packaging of the secondary battery, and the expansion tape has a larger expansion ratio.

In some embodiments, a glass transition temperature of the organic adhesive ranges from -20°C to 60°C. With the glass transition temperature of the organic adhesive in the foregoing range, the expansion tape has a larger expansion ratio and better mechanical performance.

In some embodiments, an initial expansion temperature of the temperature expansion material ranges from 70°C to 130°C, and optionally from 80°C to 110°C. With the initial expansion temperature of the temperature expansion material in the foregoing range, the expansion tape can match the conventional secondary battery packaging process and complete the temperature-responsive expansion process in the secondary battery packaging process, so the expansion tape can expand synchronously in the secondary battery packaging process to fill the gap between the electrode plate and the housing.

In some embodiments, the organic adhesive includes at least one of an acrylate adhesive, a methyl methacrylate adhesive, an acrylic adhesive, an ethylene vinyl acetate adhesive, and a polypropylene adhesive, and optionally includes an acrylate adhesive. The organic adhesive has both good swelling performance and adhesion performance, and can also maintain a certain level of adhesion after absorbing the electrolyte and expanding.

In some embodiments, a material of the substrate includes at least one of polyethylene terephthalate, polyimide, polypropylene, and polyethylene.

In some embodiments, the primer layer includes at least one of modified polypropylene, styrene-isoprene-styrene block copolymer, and hydrogenated styrene-butadiene-styrene block copolymer. The primer layer has a material with good adhesion and is electrolyte resistant, and when used for packaging of the secondary battery, the primer layer can still maintain good adhesion after injection of the electrolyte so as to avoid peeling off or displacement of the expansion tape.

In some embodiments, the expansion tape further includes:
an oriented polystyrene layer provided on a surface of the expansion layer away from the substrate;
optionally, a ratio of a thickness of the oriented polystyrene layer to a thickness of the expansion tape is less than or equal to 20:100, and optionally (5-20):100; and
optionally, the thickness of the oriented polystyrene layer ranges from 15 µm to 90 µm, and more optionally from 25 µm to 50 µm.

The oriented polystyrene layer has features such as high strength, great rigidity, and stable shape. With the oriented polystyrene layer provided on the surface of the expansion layer away from the substrate, the stresses on the two surfaces of the expansion layer are basically the same, and thus the expansion tape expanded is not prone to deformation or edge curling.

According to a second aspect, this application further provides a preparation method of expansion tape for battery packaging, where the preparation method includes the following steps of preparing the expansion tape according to the first aspect:
preparing an expansion layer on one surface of a substrate; and
preparing a primer layer on a surface of the substrate away from the expansion layer.

The expansion tape prepared by the preparation method of expansion tape in the embodiments of this application has both swelling performance and temperature-responsive expansion performance, and the expansion tape has a large expansion ratio, which is particularly applicable for packaging of the secondary battery and can meet the requirement for low battery margin of the.

In some embodiments, the step of preparing an expansion layer includes:
preparing a slurry precursor by mixing a raw material of an organic adhesive and a temperature expansion material;
curing the slurry precursor to prepare an expansion layer slurry; and
applying the expansion layer slurry onto the surface of the substrate.

In some embodiments, the preparation method of expansion tape satisfies at least one of conditions (1) and (2):
(1) a solid content of the expansion layer slurry ranges from 10% to 50%; and
(2) a viscosity of the expansion layer slurry ranges from 50 mPa·s to 500 mPa·s.

According to the third aspect, this application further provides the application of the expansion tape according to the first aspect in preparation of a battery.

According to a fourth aspect, this application further provides a preparation method of secondary battery, where the preparation method includes the following steps:
adhering the primer layer of the expansion tape according to the first aspect to a surface of an electrode assembly;
placing the electrode assembly adhered with the expansion tape in a housing, and vacuum drying the resulting product at 70°C to 130°C to cause the expansion tape to undergo primary expansion;
closing the housing; and
injecting an electrolyte into the closed housing such that the expansion tape that has undergone primary expansion absorbs the electrolyte to undergo secondary expansion.

In the preparation method of secondary battery according to the embodiments of this application, with the expansion tape according to the first aspect used and provided in the secondary battery packaging process, the expansion tape expands synchronously in the secondary battery packaging process to fill the gap between the electrode assembly and the housing, which can meet the requirement for low battery pack margin. The preparation method of secondary battery features simple preparation process and low production costs.

According to a fifth aspect, this application further provides a secondary battery including:
a housing, where the housing is filled with an electrolyte;
an electrode assembly provided in the housing; and
the expansion tape according to the first aspect provided between the housing and the electrode assembly and filling a gap between the housing and the electrode assembly, the primer layer of the expansion tape being adhered to a surface of the electrode assembly.

In the secondary battery according to the embodiments of this application, with the expansion tape according to the first aspect provided between the housing and the electrode assembly, the gap between the housing and the electrode assembly can be effectively filled, and the requirement for low battery margin can be met.

According to a sixth aspect, this application further provides a battery module including the secondary battery according to the fifth aspect.

According to a seventh aspect, this application further provides a battery pack including the battery module according to the sixth aspect.

According to an eighth aspect, this application further provides an electric apparatus including at least one selected from the secondary battery according to the fifth aspect, the battery module according to the sixth aspect, or the battery pack according to the seventh aspect.

Details of one or more embodiments of this application are illustrated in the following drawings and descriptions, and other features, objects, and advantages of this application will become apparent from the descriptions, drawings, and claims.

### BRIEF DESCRIPTION OF DRAWINGS

FIG. 1 is a schematic structural diagram of an expansion tape according to an embodiment of this application;
FIG. 2 is a schematic structural diagram of an expansion tape according to another embodiment of this application;
FIG. 3 is a schematic flowchart of a preparation method of expansion tape according to an embodiment of this application;
FIG. 4 is a schematic diagram of a secondary battery according to an embodiment of this application;
FIG. 5 is an exploded view of the secondary battery according to the embodiment of this application in FIG. 4;
FIG. 6 is a schematic flowchart of a preparation method of secondary battery according to an embodiment of this application;
FIG. 7 is a schematic diagram of a battery module according to an embodiment of this application;
FIG. 8 is a schematic diagram of a battery pack according to an embodiment of this application;
FIG. 9 is an exploded view of the battery pack according to the embodiment of this application in FIG. 8; and
FIG. 10 is a schematic diagram of an electric apparatus using a secondary battery as a power source according to an embodiment of this application.

### Description of reference signs:

1. battery pack; 2. upper box body; 3. lower box body; 4. battery module; 5. secondary battery; 51. housing; 52. electrode assembly; 53. cover plate. 6. electric apparatus; 7. expansion tape; 71. substrate; 72. expansion layer; 73. primer layer; and 74. oriented styrene layer.

To better describe and illustrate those embodiments and/or examples in the present invention disclosed herein, reference may be made to one or more accompanying drawings. Additional details or examples used to describe the accompanying drawings should not be construed as limiting the scope of any one of the disclosed invention, currently described embodiment and/or example, and the best one of modes in the present invention currently understood.

### DESCRIPTION OF EMBODIMENTS

To facilitate the understanding of this application, this application will be described more comprehensively with reference to the relevant accompanying drawings. Preferred embodiments of this application are shown in the accompanying drawings. However, this application can be implemented in many different forms and is not limited to the embodiments described herein. Rather, these embodiments are provided for the purpose of providing a more thorough understanding of the disclosure of this application.

Unless otherwise defined, all technical and scientific terms used herein shall have the same meanings as commonly understood by those skilled in the art to which this application pertains. The terms used herein in the specification of this application are for description of specific embodiments only without any intention to limit this application. The term "or/and" used herein includes any and all combinations of one or more associated items listed.

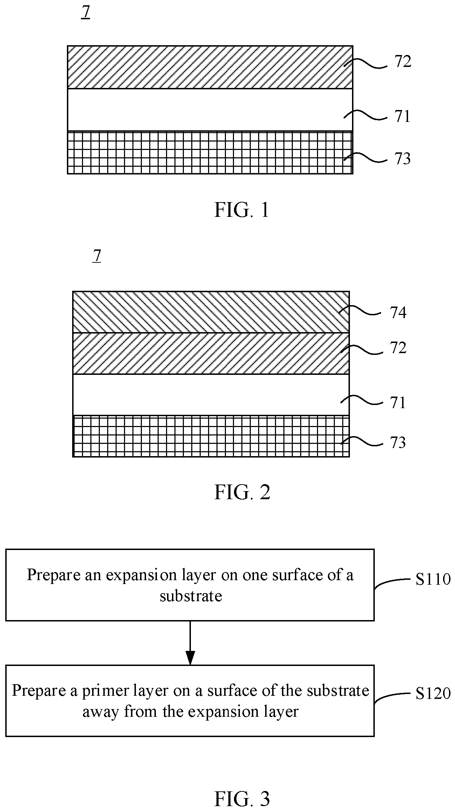

Referring to FIG. 1, an embodiment of this application provides an expansion tape 7 for battery packaging, where the expansion tape 7 includes a substrate 71, an expansion layer 72, and a primer layer 73.

The substrate 71 has opposite first surface and second surface.

The expansion layer 72 is provided on the first surface of the substrate 71. The expansion layer 72 includes an organic adhesive and a temperature expansion material. The temperature expansion material is a material capable of volume expansion after heat treatment.

The primer layer 73 is provided on the second surface of the substrate 71. The primer layer 73 has adhesion.

The expansion tape 7 for battery packaging includes a substrate 71, an expansion layer 72, and a primer layer 73. The primer layer 73 includes an organic adhesive and a temperature expansion material. The organic adhesive has swelling performance, and the temperature expansion material can expand in volume after heat treatment. The expansion tape 7 has a large expansion ratio, and thus can fill a gap between an electrode assembly and a housing for packaging of a secondary battery.

In some embodiments, a maximum ratio of an expanded thickness of the expansion tape 7 to an initial unexpanded thickness of the expansion tape 7 is greater than or equal to 5. The maximum ratio of the expanded thickness of the expansion tape 7 to the initial unexpanded thickness of the expansion tape 7 is a ratio of a maximum expanded thickness of the expansion tape 7 to an initial unexpanded thickness of the expansion tape. In an example, the expansion tape 7 expands to the maximum thickness through the following treatment: the primer layer 73 of the expansion tape 7 is adhered to the substrate and the initial unexpanded thickness of the expansion tape 7 is measured; then the expansion tape 7 is heat-treated at 110°C for 4 h to undergo primary expansion; next, the primary-expanded expansion tape 7 is immersed in a conventional electrolyte used for secondary batteries for more than 48 h to undergo secondary expansion; and the expansion tape 7 is taken out, and the expanded thickness of the expansion tape 7 is measured and used as the maximum expanded thickness of the expansion tape 7. Specifically, the thickness of the expansion tape 7 in each state can be simply measured using a micrometer. With the maximum ratio of the expanded thickness of the expansion tape 7 to an initial unexpanded thickness of the expansion tape in the foregoing range, the expansion tape 7 has a larger expansion ratio and is capable of substantially expanding to fill the gap between the electrode assembly and the housing. Further, the maximum ratio of the expanded thickness of the expansion tape 7 to an initial unexpanded thickness of the expansion tape ranges from 5 to 10. Optionally, the maximum ratio of the expanded thickness of the expansion tape 7 to an initial unexpanded thickness of the expansion tape 7 may be within a range defined by any two of the following values: 5, 6, 7, 8, 9, or 10.

In some embodiments, the initial unexpanded thickness of the expansion tape 7 ranges from 100 µm to 500 µm. With the initial unexpanded thickness of the expansion tape 7 in the foregoing range, the expansion tape 7 expanded can fill most of the gap between the electrode assembly and the housing, which can solve the problem of filling the gap between the electrode assembly and housing of the traction battery having low pack margin. Optionally, the initial unexpanded thickness of the expansion tape 7 may be in a range defined by any two of the following values: 100 µm, 150 µm, 200 µm, 250 µm, 300 µm, 350 µm, 400 µm, 450 µm, or 500 µm. Further, the initial unexpanded thickness of the expansion tape 7 ranges from 150 µm to 300 µm.

In some embodiments, the expanded thickness of the expansion tape 7 ranges from 1 mm to 5 mm. With the expanded thickness of the expansion tape 7 in the foregoing range, the expansion tape 7 expanded can fill most of the gap between the electrode assembly and the housing, which can solve the problem of filling the gap between the electrode assembly and housing of the traction battery having low pack margin. Optionally, the expanded thickness of the expansion tape 7 may be in a range defined by any two of the following values: 1 mm, 2 mm, 3 mm, 4 mm, or 5 mm. Further, the expanded thickness of the expansion tape 7 ranges from 1 mm to 3 mm.

In some embodiments, a compression ratio of the expansion tape 7 expanded ranges from 10% to 75%. The compression ratio is a percentage of thickness reduction of the expansion tape 7 expanded under predetermined stress. In this embodiment of this application, the compression ratio of the expansion tape 7 expanded can be tested by the following method: first testing the expanded thickness of the expansion tape 7; then applying a pressure of 1.5 MPa to a surface of the expansion tape 7 expanded close to the primer layer 73, and measuring the expanded thickness of the expansion tape 7 under the pressure to obtain the compression ratio through calculation. With the compression ratio of the expansion tape 7 expanded in the foregoing range, the expansion tape 7 expanded can be compressed by a force during cycling of the secondary battery, relieving the expansion stress of the electrode assembly during cycling. Optionally, the compression ratio of the expansion tape 7 expanded may be in a range defined by any two of the following values: 10%, 15%, 20%, 25%, 30%, 35%, 40%, 45%, 50%, 55%, 60%, 65%, 70%, 72%, or 75%.

In some embodiments, a ratio of a thickness of the substrate 71 to the initial unexpanded thickness of the expansion tape 7 is (2-10): 100. With the ratio of the thickness of the substrate 71 to the initial unexpanded thickness of the expansion tape 7 in the foregoing range, the expansion tape 7 has suitable mechanical strength. Further, the ratio of the thickness of the substrate 71 to the initial unexpanded thickness of the expansion tape 7 is (3-6): 100.

In some embodiments, the thickness of the substrate 71 ranges from 5 µm to 30 µm. Optionally, the thickness of the substrate 71 may be in a range defined by any two of the following values: 5 µm, 6 µm, 7 µm, 8 µm, 9 µm, 10 µm, 11 µm, 12 µm, 13 µm, 14 µm, 15 µm, 20 µm, 25 µm, or 30 µm. Further, the thickness of the substrate 71 ranges from 5 µm to 15 µm.

In some embodiments, a ratio of an initial unexpanded thickness of the expansion layer 72 to the initial unexpanded thickness of the expansion tape 7 is (75-97):100. With the ratio of the initial unexpanded thickness of the expansion layer 72 to the initial unexpanded thickness of the expansion tape 7 in the foregoing range, the expansion tape 7 has a larger expansion ratio. Further, the ratio of the initial unexpanded thickness of the expansion layer 72 to the initial unexpanded thickness of the expansion tape 7 is (90-97):100.

In some embodiments, the thickness of the expansion layer 72 ranges from 75 µm to 450 µm. Optionally, the thickness of the expansion layer 72 is 75 µm, 80 µm, 90 µm, 100 µm, 120 µm, 150 µm, 160 µm, 180 µm, 200 µm, 250 µm, 300 µm, 350 µm, 400 µm, or 450 µm. Further, the thickness of the expansion layer 72 ranges from 100 µm to 200 µm.

In some embodiments, a ratio of a thickness of the primer layer 73 to the initial unexpanded thickness of the expansion tape 7 is (1-5):100. Further, the ratio of the thickness of the primer layer 73 to the initial unexpanded thickness of the expansion tape 7 is (1.5-3):100. The primer layer 73 has adhesion and can be adhered to the surface of the electrode assembly during packaging of the secondary battery. With the thickness of the primer layer 73 controlled in the foregoing range, the expansion tape 7 can achieve a better adhesion effect.

In some embodiments, the thickness of the primer layer 73 ranges from 2.5 µm to 20 µm. Optionally, the thickness of the primer layer 73 is 2.5 µm, 3 µm, 4 µm, 5 µm, 6 µm, 7 µm, 7.5 µm, 8 µm, 10 µm, 12 µm, 14 µm, 15 µm, 16 µm, 18 µm, or 20 µm. Further, the thickness of the primer layer 73 ranges from 2.5 µm to 7.5 µm.

In some embodiments, a mass ratio of the organic adhesive to the temperature expansion material in the expansion layer 72 is (50-80):(20-50). With the mass ratio of the organic adhesive to the temperature expansion material in the expansion layer 72 in the foregoing range, the expansion layer 72 has both better swelling performance and temperature expansion performance, and the expansion tape 7 has a larger expansion ratio and is not prone to overflow of adhesive.

In some embodiments, in the expansion layer 72, a mass percentage of the organic adhesive ranges from 50% to 80%, and a mass percentage of the temperature expansion material ranges from 20% to 50%. Optionally, the mass percentage of the organic adhesive in the expansion layer 72 may be in a range defined by any two of the following values: 50%, 55%, 60%, 65%, 70%, 75%, or 80%. The mass percentage of the temperature expansion material in the expansion layer 72 may be in a range defined by any two of the following values: 20%, 25%, 30%, 35%, 40%, 45%, or 50%.

In some embodiments, a swelling ratio of the organic adhesive ranges from 50% to 200%. The swelling ratio is a ratio of a volume of the organic adhesive placed in electrolyte to a volume of the dried organic adhesive. With the swelling ratio of the organic adhesive in the foregoing range, the organic adhesive in the expansion layer 72 can absorb the electrolyte to expand during packaging of the secondary battery, and the expansion tape 7 has a larger expansion ratio. Optionally, the swelling ratio of the organic adhesive may be in a range defined by any two of the following values: 50%, 60%, 70%, 80%, 90%, 100%, 120%, 140%, 150%, 160%, 180%, or 200%.

In some embodiments, a glass transition temperature of the organic adhesive ranges from -20°C to 60°C. The glass transition temperature is a temperature at which the organic adhesive transforms from a highly elastic state to a glassy state. Above this temperature, the organic adhesive exhibits elasticity; and below this temperature, the organic adhesive exhibits brittleness. The glass transition temperature of the organic adhesive can be measured using a test method well known in the art, for example, the expansion meter method, the refractive index method, the thermo-mechanical method, the differential thermal analysis (DTA) method, the dynamic mechanical performance analysis (DMA) method, and the nuclear magnetic resonance (NMR) method. With the glass transition temperature of the organic adhesive in the foregoing range, the expansion tape has a larger expansion ratio and better mechanical performance. Optionally, the glass transition temperature of the organic adhesive may be in a range defined by any two of the following values: -20°C, -10°C, 0°C, 5°C, 10°C, 20°C, 30°C, 40°C, 50°C, or 60°C.

In some embodiments, an initial expansion temperature of the temperature expansion material ranges from 70°C to 130°C. The initial expansion temperature of the temperature expansion material is a temperature at which the temperature expansion material begins to expand. With the initial expansion temperature of the temperature expansion material in the foregoing range, the expansion tape 7 can match the conventional secondary battery packaging process and complete the temperature-responsive expansion process in the secondary battery packaging process, so the expansion tape 7 can expand synchronously in the secondary battery packaging process to fill the gap between the electrode plate and the housing. Optionally, the initial expansion temperature of the temperature expansion material may be in a range defined by any two of the following values: 70°C, 80°C, 90°C, 100°C, 110°C, 120°C, or 130°C. Further, the initial expansion temperature of the temperature expansion material ranges from 80°C to 110°C.

In some embodiments, the organic adhesive includes at least one of an acrylate adhesive, a methyl methacrylate adhesive, an acrylic adhesive, an ethylene vinyl acetate adhesive, and a polypropylene adhesive. Optionally, the organic adhesive includes an acrylate adhesive. The organic adhesive has both good swelling performance and adhesion performance, and can also maintain a certain level of adhesion after absorbing the electrolyte and expanding.

In some embodiments, the temperature expansion material includes at least one of expansion microspheres and polyurethane. The temperature expansion material described above has a suitable initial expansion temperature and expansion ratio, and the expansion tape 7 has a larger expansion ratio. Optionally, the temperature expansion material includes expansion microspheres. The expanding microsphere is a thermoplastic hollow polymer microsphere consisting of a thermoplastic polymer shell and an enclosed liquid alkane gas. When heated, gas pressure inside the shell increases and the thermoplastic shell softens, resulting in a significant increase in the volume of the expansion microsphere. When cooled, the shell of the expansion microsphere hardens again and has a fixed volume.

In some embodiments, the expansion microspheres may be at least one selected from 551DU40, 461DU20, 461DU40, 031DU40, 053DU40, 007WUF20, and 031WUF20 of the EXPANCEL series from AkzoNobel. The expansion microspheres have a more suitable initial expansion temperature.

In some embodiments, the expansion layer 72 further optionally includes a tackifier. In an example, the tackifier includes at least one of C5 petroleum resin, C9 petroleum resin, hydrocarbon petroleum resin, and dicyclopentadiene DCPD resin. Further, a mass percentage of the tackifier in the expansion layer 72 ranges from 5% to 30%.

In some embodiments, the expansion layer 72 further optionally includes an antioxidant. Further, a mass percentage of the antioxidant in the expansion layer 72 ranges from 0.5% to 2%.

In some embodiments, a material of the substrate 71 includes at least one of polyethylene terephthalate (PET), polyimide (PI), polypropylene (PP), and polyethylene.

In some embodiments, the primer layer 73 includes at least one of modified polypropylene, styrene-isoprene-styrene block copolymer (SIS), and hydrogenated styrene-butadiene-styrene block copolymer (SEBS). The primer layer 73 has a material with good adhesion and is electrolyte resistant, and when used for packaging of the secondary battery, the primer layer 73 can still maintain good adhesion after injection of the electrolyte so as to avoid peeling off or displacement of the expansion tape 7.

Referring to FIG. 2, in some embodiments, the expansion tape 7 further includes an oriented polystyrene layer. The oriented polystyrene layer is provided on a surface of the expansion layer 72 away from the substrate 71. The oriented polystyrene (OPS) has features such as high strength, great rigidity, and stable shape. With the oriented polystyrene layer provided on the surface of the expansion layer 72 away from the substrate 71, the stresses on the two surfaces of the expansion layer 72 are basically the same, and thus the expansion tape 7 expanded is not prone to deformation or edge curling.

In some embodiments, a ratio of a thickness of the oriented polystyrene layer to the thickness of the expansion tape 7 is less than or equal to 20:100. With the thickness of the oriented polystyrene layer in the foregoing range, the expansion tape 7 has suitable mechanical strength, and the expansion tape 7 expanded is not prone to deformation or edge curling. Further, the ratio of the thickness of the oriented polystyrene layer to the thickness of the expansion tape 7 is (5-20):100.

In some embodiments, the thickness of the oriented polystyrene layer ranges from 15 µm to 90 µm. Optionally, the thickness of the oriented polystyrene layer is 15 µm, 20 µm, 25 µm, 30 µm, 35 µm, 40 µm, 45 µm, 50 µm, 60 µm, 70 µm, 80 µm, or 90 µm. Further, the thickness of the oriented polystyrene layer ranges from 25 µm to 50 µm.

Referring to FIG. 3, another embodiment of this application further provides a preparation method of expansion tape 7 for battery packaging, where the preparation method includes the following steps S110 and S120 of preparing the expansion tape 7 according to the first aspect.

S110: Prepare an expansion layer 72 on one surface of a substrate 71.

S120: Prepare a primer layer 73 on a surface of the substrate 71 away from the expansion layer 72.

The expansion tape 7 prepared by the foregoing preparation method of expansion tape 7 has both swelling performance and temperature-responsive expansion performance, and the expansion tape 7 has a large expansion ratio, which is particularly applicable for packaging of secondary batteries.

In some embodiments, step S110 includes the following steps.

S111: Prepare a slurry precursor by mixing a raw material of an organic adhesive and a temperature expansion material. In some embodiments, the raw material of the organic adhesive includes a glue matrix and a curing agent. Optionally, the glue matrix includes at least one of methyl methacrylate, vinyl acetate, ethyl acrylate, acrylate, and acrylonitrile.

In some embodiments, step S111 further includes mixing a solvent and other optional components (for example, tackifier and antioxidant) with the raw material of the organic adhesive and the temperature expansion material. Specifically, the solvent includes at least one of ethyl acetate, toluene, and xylene.

S112: Cure the slurry precursor to prepare an expansion layer 72 slurry.

S113: Apply the expansion layer 72 slurry onto the surface of the substrate 71.

In some embodiments, a solid content of the expansion layer 72 slurry ranges from 10% to 50%.

In some embodiments, a viscosity of the expansion layer 72 slurry ranges from 50 mPa·s to 500 mPa·s.

In some embodiments, step S110 is specifically: weighing the solvent, the glue matrix, the curing agent, the temperature expansion material, and another optional component according to a predetermined composition of the expansion layer 72. The weighed solvent, glue matrix, temperature expansion material, and another optional component are then well stirred under vacuum to prepare a slurry precursor. The curing agent is then added to the slurry precursor, and the resulting mixture is continued to be stirred under vacuum for 10 min to 20 min to prepare the expansion layer 72 slurry. The prepared expansion layer 72 slurry is uniformly applied onto a first surface of the substrate 71 to prepare the expansion layer 72.

In addition, the following describes a secondary battery, a battery module, a battery pack, and an electric apparatus in this application with appropriate reference to the accompanying drawings.

An embodiment of this application provides a secondary battery.

Normally, the secondary battery includes a positive electrode plate, a negative electrode plate, an electrolyte, and a separator. In a charge and discharge process of the battery, active ions intercalate and deintercalate between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

### [Positive electrode plate]

The positive electrode plate includes a positive electrode current collector and a positive electrode film layer disposed on at least one surface of the positive electrode current collector, where the positive electrode film layer includes the positive electrode active material according to the first aspect of this application.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, under the condition that the secondary battery is a lithium-ion battery, the positive electrode active material may be a well-known positive electrode active material used for lithium-ion batteries in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional materials that can be used as positive electrode active materials for batteries instead. One of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, under the condition that the secondary battery is a sodium-ion battery, the positive electrode active material may be a well-known positive electrode active material used for sodium-ion batteries in the art. In an example, one of these positive electrode active materials may be used alone, or two or more of them may be used in combination. The positive electrode active material may be selected from sodium-iron complex oxide (NaFeO₂), sodium-cobalt complex oxide (NaCoO₂), sodium-chromium complex oxide (NaCrO₂), sodium-manganese complex oxide (NaMnO₂), sodium-nickel complex oxide (NaNiO₂), sodium-nickel-titanium complex oxide (NaNi_{1/2}Ti_{1/2}O₂), sodium-nickel-manganese complex oxide (NaNi_{1/2}Mn_{1/2}O₂), sodium-iron-manganese complex oxide (Na_{2/3}Fe_{1/3}Mn_{2/3}O₂), sodium-nickel-cobalt-manganese complex oxide (NaNi_{1/3}Co_{1/3}Mn_{1/3}O₂), sodium-iron phosphate compound (NaFePO₄), sodium-manganese phosphate compound (NaMn_{P}O₄), sodium-cobalt phosphoric acid compound (NaCoPO₄), a Prussian blue material, a polyanionic material (phosphate, fluorophosphate, pyrophosphate, sulfate), and the like. However, this application is not limited to these materials, and this application may use other conventionally known materials that can be used as positive electrode active materials for sodium-ion batteries.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to produce a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for batteries in the art. For example, the negative electrode active material may include at least one of the following materials: artificial graphite, natural graphite, soft carbon, hard carbon, a silicon-based material, a tin-based material, lithium titanate, and the like. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this application is not limited to these materials, and may alternatively use other conventional materials that can be used as negative electrode active materials for batteries instead. One of these negative electrode active materials may be used alone, or two or more of them may be used in combination.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be at least one selected from superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to produce a negative electrode slurry; and the negative electrode slurry is applied onto the negative electrode current collector, followed by processes such as drying and cold pressing to obtain the negative electrode plate.

### [Separator]

In some embodiments, the secondary battery further includes a separator. The separator is not limited to any particular type in this application, and may be any well-known porous separator with good chemical stability and mechanical stability.

In some embodiments, a material of the separator may be at least one selected from glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

### [Electrolyte]

The electrolyte conducts ions between the positive electrode plate and the negative electrode plate. The electrolyte is not specifically limited to any particular type in this application, and may be selected depending on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be at least one selected from lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

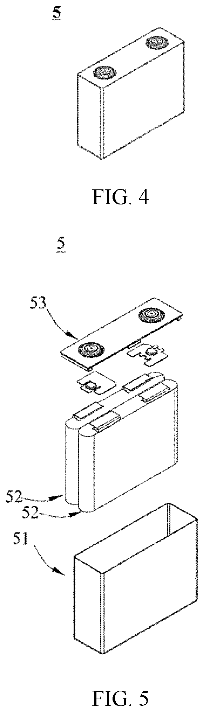

This application does not impose any special limitations on a shape of the secondary battery, and the secondary battery may be cylindrical, rectangular, or of any other shapes. For example, FIG. 4 shows a secondary battery 5 of a rectangular structure as an example.

In some embodiments, referring to FIG. 5, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The secondary battery 5 may include one or more electrode assemblies 52, and persons skilled in the art may make choices according to actual requirements.

Another embodiment of this application further provides a secondary battery 5 including a housing 51, an electrode assembly 52, and the expansion tape 7 according to the first aspect.

The housing 51 is filled with an electrolyte. The electrode assembly 52 is provided in the housing. The expansion tape 7 is provided between the housing 51 and the electrode assembly 52 and fills a gap between the housing 51 and the electrode assembly 52. The primer layer 73 of the expansion tape 7 is adhered to a surface of the electrode assembly 52.

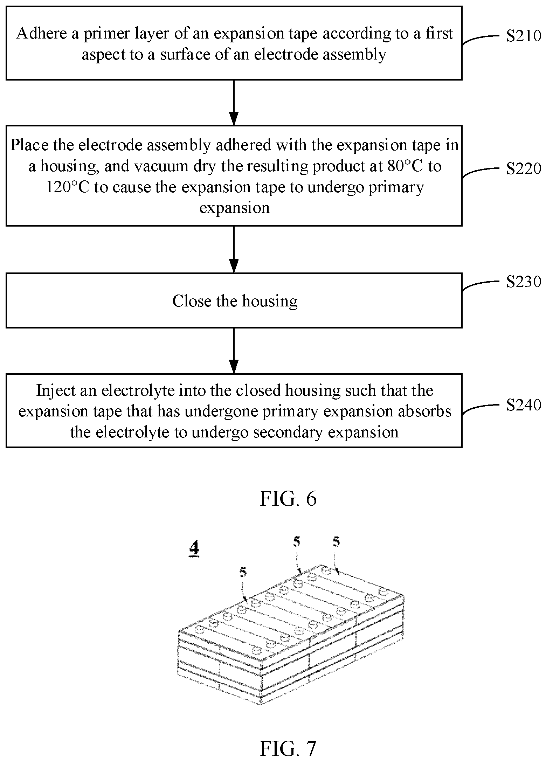

Referring to FIG. 6, an embodiment of this application further provides a preparation method of secondary battery 5, where the method includes the following steps S210 to S240.

S210: Adhere the primer layer 73 of the expansion tape 7 according to the first aspect to a surface of an electrode assembly 52.

S220: Place the electrode assembly 52 adhered with the expansion tape 7 in a housing, and vacuum dry the resulting product at 70°C to 130°C to cause the expansion tape 7 to undergo primary expansion. In step S220, the electrode assembly 52 is placed in the housing 51 and vacuum dried at 70°C to 130°C to remove water and oxygen from the electrode assembly 52 and the housing 51, and the temperature expansion material in the expansion tape 7 expands synchronously in this process, causing the expansion tape 7 to undergo primary expansion.

S230: Close the housing 51. Specifically, the housing 51 is closed in step S230 by covering an opening of the housing 51 with the cover plate 53.

S240: Inject an electrolyte into the closed housing 51 such that the expansion tape 7 that has undergone primary expansion absorbs the electrolyte to undergo secondary expansion. In step S240, an organic adhesive in the expansion tape 7 can absorb the electrolyte to swell, thereby causing the expansion tape 7 to undergo secondary expansion.

In the foregoing preparation method of secondary battery 5, with the expansion tape 7 according to the first aspect used and provided in the secondary battery packaging process, the expansion tape 7 expands synchronously in the secondary battery packaging process to fill the gap between the electrode assembly and the housing. The preparation method of secondary battery features simple preparation process and low production costs.

In some embodiments, the secondary battery may be assembled into a battery module, and the battery module may include one or more secondary batteries. The specific quantity may be chosen by persons skilled in the art according to use and capacity of the battery module.

FIG. 7 shows a battery module 4 as an example. Referring to FIG. 7, in the battery module 4, a plurality of secondary batteries 5 may be sequentially arranged along a length direction of the battery module 4. Certainly, the batteries may alternatively be arranged in any other manners. Further, the plurality of secondary batteries 5 may be fastened through fasteners.

Optionally, the battery module 4 may further include an enclosure with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

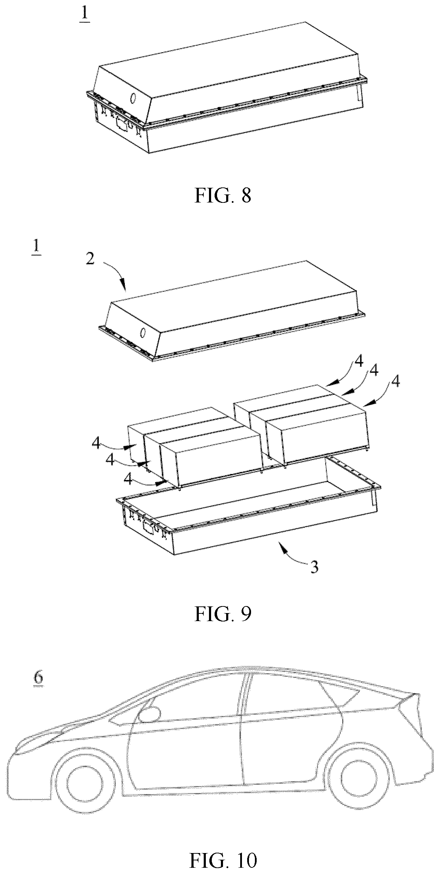

FIG. 8 and FIG. 9 show a battery pack 1 as an example. Referring to FIG. 8 and FIG. 9, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 10 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### (1) Preparation of expansion tape

The composition of the expansion tape was selected and prepared according to the compositions of Examples 1 to 29 and Comparative Example 1 in Table 1.

Preparation of expansion layer: A solvent ethyl acetate, glue matrix, curing agent, and temperature expansion material were weighed according to the predetermined composition of the expansion layer. The weighed solvent, glue matrix, and temperature expansion material were then stirred under vacuum to prepare a slurry precursor. The curing agent was then added to the slurry precursor, and the resulting mixture was continued to be stirred under vacuum for 20 min to prepare an expansion layer slurry, which had a solid content of 50% and a viscosity of 500 mPa·s. The prepared expansion layer slurry was uniformly applied onto a first surface of the substrate to prepare the expansion layer. For the composition ratio of the expansion layer, refer to Table 1.

Preparation of primer layer: SIS and SEBS materials were added at a mass ratio of 1:1 into a glass reactor, the glass reactor was heated, and the mixture was stirred into uniformity and then applied onto a second surface of the PET substrate. The resulting product was rolled up for later use. In particular, preparation of primer layer in Example 13 was as follows: an acrylic adhesive (PMMA) was heated and stirred, and then evenly applied onto the second surface of the PET substrate. The resulting product was rolled up for later use.

Preparation of oriented polystyrene layer: the oriented polystyrene film was transferred and applied onto the expansion layer.

### (2) Preparation of electrode assembly

Preparation of positive electrode plate: A positive electrode active material lithium iron phosphate, a conductive agent conductive carbon black, and a binder were mixed and dispersed at a weight ratio of 97:1:2 in N-methylpyrrolidone, where the binder was modified polyvinylidene fluoride. The resulting mixture was mixed well and evenly to produce a positive electrode slurry; the positive slurry was evenly applied onto a positive electrode current collector aluminum foil, followed by drying, cold pressing, and slitting, and a positive electrode plate was prepared.

Preparation of negative electrode plate: An active material artificial graphite, a conductive agent acetylene black, a binder styrene-butadiene rubber (SBR), and a thickener carboxymethyl cellulose sodium (CMC) were dissolved at a weight ratio of 97:0.4:1.5:1.1 in a solvent deionized water, and mixed well to produce a negative electrode slurry. The negative electrode slurry was evenly applied onto a negative electrode current collector copper foil, followed by drying, cold pressing, and slitting, and a negative electrode plate was prepared.

Separator: APE porous polymerized film was used as a separator.

Preparation of electrode assembly: the positive pole electrode plate, separator, and negative electrode plate were stacked in sequence, then the stack was wound, pressed, shaped, and welded with tabs, and an electrode assembly was prepared.

### (3) Preparation of secondary battery

Electrolyte: In an argon atmosphere glove box with a water content of less than 10 ppm, ethylene carbonate (EC) and ethyl methyl carbonate (EMC) of equal volumes were mixed to produce an organic solvent, and then 1 mol/L LiPF₆ was uniformly dissolved in the organic solvent. An electrolyte was prepared.

In Examples 1 to 29 and Comparative Example 1, the primer layer of the expansion tape was adhered to the surface of the electrode assembly, and then the resulting product was placed in the housing and vacuum-dried at 100°C to cause the expansion tape to undergo primary expansion. The cover plate covered the opening of the housing to close the housing. The electrolyte was injected into the closed housing at room temperature such that the expansion tape that had undergone primary expansion absorbed the electrolyte to undergo secondary expansion. The secondary battery was then prepared after processes such as formation. It should be noted that a width of the gap between the housing and the electrode assembly ranges from 1 mm to 2 mm, which matches the second expansion thickness of the expansion tape used, and the difference between the gap width and the second expansion thickness is within the range of ±50 µm.

### Tests

### Adhesion force test

The adhesion force test was conducted according to the 180-degree stripping resistance test method of tape. Specifically, the to-be-tested tape was cut into samples of 20 mm×100 mm for later use. The primer layer side of the cut sample was affixed to the steel plate and rolled back and forth twice with a 2 kg pressure roller, such that the sample completely fitted with the steel plate. One end of the sample was bent in the reverse direction with a bending angle of 180°. A Gotech tensile machine was used for testing the sample. One end of the steel plate was fixed in the lower fixture of the tensile machine, and the bent end of the sample was fixed in the upper fixture. The angle of the sample was adjusted to ensure that the upper and lower ends were located in vertical positions. The sample was then stretched at a speed of 50 mm/min until the sample was all peeled off the steel plate. The displacement and force in the process were recorded. Generally, the force at which the sample was evenly stressed was considered as the adhesion force of the sample.

### Expansion test for expansion tape

The expansion tape was cut into pieces of 5 mm×5 mm and then the expansion tape piece was adhered to the substrate. The initial unexpanded thickness of the expansion tape piece was measured with a micrometer. Then the expansion tape piece adhered to the substrate was kept at 100°C for 4 h to cause the expansion tape to undergo primary expansion. The thickness of the expansion tape undergone primary expansion was measured with the micrometer. The expansion tape undergone primary expansion was then immersed in electrolyte at 45°C for 48 h for secondary expansion. The thickness of the expansion tape undergone secondary expansion was measured with the micrometer. Thickness test: Two PP boards of 5 cm×5 cm×0.5 cm with a flat surface were prepared and placed on a horizontal workbench, the expanded and unexpanded tapes were placed flatwise between the PP boards. The thicknesses were measured with the micrometer, and measurement was performed at 10 points and the average value thereof was taken. The maximum expansion ratio was a ratio of the thickness of the expansion tape undergone secondary expansion to the initial unexpanded thickness of the expansion tape.

### Compression ratio test

A stress of 1.5 MPa was applied to the expansion tape undergone secondary expansion, and the thickness of the expansion tape undergone secondary expansion under the stress was measured. The ratio of the reduction in the thickness of the expansion tape under the stress to the thickness of the expansion tape undergone secondary expansion was the compression ratio of the expansion tape.

### Secondary battery cycle test

The prepared battery cell was hung up for testing and cycling. After 100 cycles, the battery cell was taken down and then disassembled. The expansion tape was taken out, the thickness of the expansion tape was measured with the micrometer, and the expansion tape was visually observed for whether overflow of adhesive was presented around the expansion tape.

**Table 1**

| No. | Primer layer | | Substrate | | Expansion layer | | | | | Oriented polystyrene layer | Initial thickness (µm) |
|---|---|---|---|---|---|---|---|---|---|---|---|
| | Material | Thickness (µm) | Material | Thickness (µm) | Organic adhesive | Percentage of organic adhesive (wt%) | Type of temperature expansion material | Percentage of temperature expansion material (wt%) | Thickness (µm) | Thickness (µm) | |
| Example 1 | SEBS+SIS | 5 | PET | 10 | Monomer ratio: 2-ethylhexyl acrylate:methyl acrylate:vinyl acetate = 1:1:2 | 70 | 551DU40 | 30 | 185 | 0 | 200 |
| Example 2 | SEBS+SIS | 5 | PET | 10 | Same as Example 1 | 70 | 461DU20 | 30 | 185 | 0 | 200 |
| Example 3 | SEBS+SIS | 5 | PET | 10 | Same as Example 1 | 70 | 461DU40 | 30 | 185 | 0 | 200 |
| Example 4 | SEBS+SIS | 5 | PET | 10 | Same as Example 1 | 70 | 031DU40 | 30 | 185 | 0 | 200 |
| Example 5 | SEBS+SIS | 5 | PET | 10 | Same as Example 1 | 70 | 053DU40 | 30 | 185 | 0 | 200 |
| Example 6 | SEBS+SIS | 5 | PET | 10 | Same as Example 1 | 70 | 007WUF20 | 30 | 185 | 0 | 200 |
| Example 7 | SEBS+SIS | 5 | PET | 10 | Same as Example 1 | 70 | 031WUF20 | 30 | 185 | 0 | 200 |
| Example 8 | SEBS+SIS | 5 | PET | 10 | Same as Example 1 | 70 | Polyurethane | 30 | 185 | 0 | 200 |
| Example 9 | SEBS+SIS | 5 | PET | 10 | EVA | 70 | 031DU40 | 30 | 185 | 0 | 200 |
| Example 10 | SEBS+SIS | 5 | PET | 10 | Maleic anhydride graft-modified PP | 70 | 031DU40 | 30 | 185 | 0 | 200 |
| Example 11 | SEBS+SIS | 5 | PI | 10 | Same as Example 1 | 70 | 031DU40 | 30 | 185 | 0 | 200 |
| Example 12 | SEBS+SIS | 5 | PP | 10 | Same as Example 1 | 70 | 031DU40 | 30 | 185 | 0 | 200 |
| Example 13 | Acrylic | 5 | PET | 10 | Same as Example 1 | 70 | 031DU40 | 30 | 185 | 0 | 200 |
| Example 14 | SEBS+SIS | 5 | PET | 10 | Same as Example 1 | 80 | 031DU40 | 20 | 185 | 0 | 200 |
| Example 15 | SEBS+SIS | 5 | PET | 10 | Same as Example 1 | 60 | 031DU40 | 40 | 185 | 0 | 200 |
| Example 16 | SEBS+SIS | 5 | PET | 10 | Same as Example 1 | 50 | 031DU40 | 50 | 185 | 0 | 200 |
| Example 17 | SEBS+SIS | 2.5 | PET | 5 | Same as Example 1 | 70 | 031DU40 | 30 | 75 | 17.5 | 100 |
| Example 18 | SEBS+SIS | 5 | PET | 10 | Same as Example 1 | 70 | 031DU40 | 30 | 100 | 0 | 115 |
| Example 19 | SEBS+SIS | 5 | PET | 10 | Same as Example 1 | 70 | 031DU40 | 30 | 150 | 0 | 165 |
| Example 20 | SEBS+SIS | 5 | PET | 10 | Same as Example 1 | 70 | 031DU40 | 30 | 200 | 0 | 215 |
| Example 21 | SEBS+SIS | 5 | PET | 10 | Same as Example 1 | 70 | 031DU40 | 30 | 300 | 0 | 315 |
| Example 22 | SEBS+SIS | 5 | PET | 10 | Same as Example 1 | 70 | 031DU40 | 30 | 400 | 0 | 415 |
| Example 23 | SEBS+SIS | 5 | PET | 10 | Same as Example 1 | 70 | 031DU40 | 30 | 450 | 0 | 465 |
| Example 24 | SEBS+SIS | 5 | PET | 10 | Same as Example 1 | 70 | 031DU40 | 30 | 450 | 35 | 500 |
| Example 25 | SEBS+SIS | 5 | PET | 10 | Same as Example 1 | 70 | 031DU40 | 30 | 120 | 15 | 150 |
| Example 26 | SEBS+SIS | 5 | PET | 10 | Same as Example 1 | 70 | 031DU40 | 30 | 240 | 45 | 300 |
| Example 27 | SEBS+SIS | 5 | PET | 10 | Same as Example 1 | 70 | 031DU40 | 30 | 310 | 75 | 400 |
| Example 28 | SEBS+SIS | 5 | PET | 10 | Same as Example 1 | 70 | 031DU40 | 30 | 395 | 90 | 500 |
| Comparative Example 1 | SEBS+SIS | 5 | PET | 10 | Same as Example 1 | 100 | / | 0 | 185 | 0 | 200 |

**Table 2**

| No. | Expansion thickness (µm) | | Adhesion force (N) | Maximum expansion ratio | Compression ratio (%) |
|---|---|---|---|---|---|
| | First expansion thickness | Second expansion thickness | | | |
| Example 1 | 610 | 1358 | 324 | 6.8 | 70 |
| Example 2 | 656 | 1451 | 310 | 7.3 | 65 |
| Example 3 | 788 | 1606 | 425 | 8.0 | 60 |
| Example 4 | 1145 | 1878 | 457 | 9.4 | 60 |
| Example 5 | 867 | 1541 | 365 | 7.7 | 61 |
| Example 6 | 712 | 1432 | 258 | 7.2 | 55 |
| Example 7 | 743 | 1486 | 296 | 7.4 | 55 |
| Example 8 | 643 | 1056 | 312 | 5.3 | 57 |
| Example 9 | 945 | 1470 | 457 | 7.4 | 70 |
| Example 10 | 945 | 1485 | 457 | 7.4 | 67 |
| Example 11 | 945 | 1578 | 457 | 7.9 | 70 |
| Example 12 | 945 | 1578 | 457 | 7.9 | 69 |
| Example 13 | 945 | 1578 | 470 | 7.9 | 72 |
| Example 14 | 745 | 1243 | 434 | 6.2 | 62 |
| Example 15 | 1023 | 1523 | 323 | 7.6 | 63 |
| Example 16 | 1140 | 1553 | 327 | 7.8 | 61 |
| Example 17 | 545 | 1004 | 411 | 10.0 | 67 |
| Example 18 | 670 | 1045 | 389 | 9.1 | 69 |
| Example 19 | 687 | 1098 | 365 | 6.7 | 70 |
| Example 20 | 661 | 1013 | 378 | 4.7 | 70 |
| Example 21 | 917 | 1154 | 314 | 3.7 | 69 |
| Example 22 | 1255 | 1645 | 352 | 4.0 | 70 |
| Example 23 | 1371 | 1723 | 371 | 3.7 | 68 |
| Example 24 | 1495 | 1965 | 368 | 3.9 | 70 |
| Example 25 | 587 | 984 | 390 | 6.6 | 70 |
| Example 26 | 998 | 1435 | 416 | 4.8 | 59 |
| Example 27 | 1067 | 1546 | 357 | 3.9 | 70 |
| Example 28 | 1308 | 1657 | 345 | 3.3 | 68 |
| Comparative Example 1 | 252 | 420 | 405 | 2.1 | 51 |

**Table 3**

| No. | Compressed length of expansion tape (µm) | | | | Overflow of adhesive in expansion tape |
|---|---|---|---|---|---|
| | 100 cycles | 200 cycles | 300 cycles | 400 cycles | |
| Example 1 | 679 | 746.9 | 814.8 | 950.6 | No overflow of adhesive |
| Example 2 | 725.5 | 798.05 | 870.6 | 1015.7 | No overflow of adhesive |
| Example 3 | 753 | 828.3 | 903.6 | 1054.2 | No overflow of adhesive |
| Example 4 | 789 | 867.9 | 946.8 | 1104.6 | No overflow of adhesive |
| Example 5 | 670.5 | 737.55 | 804.6 | 938.7 | No overflow of adhesive |
| Example 6 | 716 | 787.6 | 859.2 | 1002.4 | No overflow of adhesive |
| Example 7 | 743 | 817.3 | 891.6 | 1040.2 | No overflow of adhesive |
| Example 8 | 428 | 470.8 | 513.6 | 599.2 | No overflow of adhesive |
| Example 9 | 735 | 808.5 | 882 | 1029 | No overflow of adhesive |
| Example 10 | 742.5 | 816.75 | 891 | 1039.5 | No overflow of adhesive |
| Example 11 | 789 | 867.9 | 946.8 | 1104.6 | No overflow of adhesive |
| Example 12 | 789 | 867.9 | 946.8 | 1104.6 | No overflow of adhesive |
| Example 13 | 789 | 867.9 | 946.8 | 1104.6 | No overflow of adhesive |
| Example 14 | 621.5 | 683.65 | 745.8 | 870.1 | No overflow of adhesive |
| Example 15 | 761.5 | 837.65 | 913.8 | 1066.1 | No overflow of adhesive |
| Example 16 | 776.5 | 854.15 | 931.8 | 1087.1 | No overflow of adhesive |
| Example 17 | 267 | 293.7 | 320.4 | 373.8 | No overflow of adhesive |
| Example 18 | 306 | 336.6 | 367.2 | 428.4 | No overflow of adhesive |
| Example 19 | 315.5 | 347.05 | 378.6 | 441.7 | No overflow of adhesive |
| Example 20 | 356.5 | 392.15 | 427.8 | 499.1 | No overflow of adhesive |
| Example 21 | 577 | 634.7 | 692.4 | 807.8 | No overflow of adhesive |
| Example 22 | 822.5 | 904.75 | 987 | 1151.5 | No overflow of adhesive |
| Example 23 | 861.5 | 947.65 | 1033.8 | 1206.1 | No overflow of adhesive |
| Example 24 | 982.5 | 1080.75 | 1179 | 1375.5 | No overflow of adhesive |
| Example 25 | 387 | 425.7 | 464.4 | 541.8 | No overflow of adhesive |
| Example 26 | 717.5 | 789.25 | 861 | 1004.5 | No overflow of adhesive |
| Example 27 | 773 | 850.3 | 927.6 | 1082.2 | No overflow of adhesive |
| Example 28 | 828.5 | 911.35 | 994.2 | 1159.9 | No overflow of adhesive |
| Comparative Example 1 | 78 | 85.8 | 93.6 | 109.2 | No overflow of adhesive |

It can be seen from the data in Tables 1 to 3 that in Examples 1 to 28, the expansion tapes have the adhesion forces of 258 N to 470 N and the maximum expansion ratios of 3.3 to 10, and the expansion tapes expanded under pressure have the compression ratios of 55% to 72%. The expansion tapes in Examples 1 to 28 have a larger expansion ratio and can be compressed under pressure. Therefore, the expansion tapes in Examples 1 to 29 can better fill the gap between the electrode assembly and the housing, better buffer the volume expansion of the electrode assembly during cycling, and can meet the requirement for low battery pack margin. For the secondary batteries made from the expansion tapes in Examples 1 to 28, the expansion tapes have no overflow of adhesive within 400 cycles.

It can be seen from Examples 1 to 8 that the expansion tape produced using 031DU40 expansion microspheres in Example 4 has a larger maximum expansion ratio. In Examples 4 and 14 to 16, the composition ratio of the expansion layer is adjusted, so the expansion tape has a larger maximum expansion ratio of 6.2 to 9.4. In Examples 1 to 19 and 25, the expansion tapes all have a maximum expansion ratio of greater than or equal to 5 and the thickness of 100 µm to 200 µm, which can meet the packaging requirements of most secondary batteries on the market.

The differences between the expansion tapes in Comparative Example 1 and Example 1 are that in Comparative Example 1, the expansion layer includes no temperature expansion material, and the expansion tape has the adhesion force of 405 N and the maximum expansion ratio of 2.1, which is difficult to meet the packaging requirements of secondary batteries on the market. The expansion tape expanded in Comparative Example 1 under pressure has the compression ratio of 51%. In addition, it is practically difficult to prepare the expansion tape in Comparative Example 1 with a thickness of greater than 100 µm, and it is difficult for the expanded thickness of the expansion tape to meet the packaging requirements of secondary batteries.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application. It should be noted that those of ordinary skill in the art may further make several modifications and improvements without departing from the concept of this application, and these modifications and improvements also fall within the protection scope of this application. Therefore, the protection scope of this application should be subject to the appended claims.

## Claims

1. An expansion tape for battery packaging, comprising:
a substrate having opposite first surface and second surface;
an expansion layer provided on the first surface of the substrate, wherein the expansion layer comprises an organic adhesive and a temperature expansion material, the temperature expansion material being a material capable of volume expansion after heat treatment; and
a primer layer provided on the second surface of the substrate, wherein the primer layer has adhesion.

2. The expansion tape according to claim 1, wherein a maximum ratio of an expanded thickness of the expansion tape to an initial unexpanded thickness of the expansion tape is greater than or equal to 5, and optionally ranges from 5 to 10.

3. The expansion tape according to claim 1 or 2, wherein the initial unexpanded thickness of the expansion tape ranges from 100 µm to 500 µm, and optionally from 150 µm to 300 µm.

4. The expansion tape according to any one of claims 1 to 3, wherein the expanded thickness of the expansion tape ranges from 1 mm to 5 mm, and optionally from 1 mm to 3 mm.

5. The expansion tape according to any one of claims 1 to 4, wherein a compression ratio of the expansion tape expanded ranges from 10% to 75%, the compression ratio being a proportion of thickness reduction of the expansion tape expanded under predetermined stress.

6. The expansion tape according to any one of claims 1 to 5, wherein a ratio of a thickness of the substrate to the initial unexpanded thickness of the expansion tape is (2-10):100, and optionally (3-6):100; and
optionally, the thickness of the substrate ranges from 5 µm to 30 µm, and optionally from 5 µm to 15 µm.

7. The expansion tape according to any one of claims 1 to 6, wherein a ratio of an initial unexpanded thickness of the expansion layer to the initial unexpanded thickness of the expansion tape is (75-97):100, and optionally (90-97):100; and
optionally, the thickness of the expansion layer ranges from 75 µm to 450 µm, and optionally from 100 µm to 300 µm.

8. The expansion tape according to any one of claims 1 to 7, wherein a ratio of a thickness of the primer layer to the initial unexpanded thickness of the expansion tape is (1-5):100, and optionally (1.5-3):100; and
optionally, the thickness of the primer layer ranges from 2.5 µm to 20 µm, and optionally from 2.5 µm to 7.5 µm.

9. The expansion tape according to any one of claims 1 to 8, wherein a mass ratio of the organic adhesive to the temperature expansion material in the expansion layer is (50-80):(20-50); and
optionally, in the expansion layer, a mass percentage of the organic adhesive ranges from 50% to 80%, and a mass percentage of the temperature expansion material ranges from 20% to 50%.

10. The expansion tape according to any one of claims 1 to 9, wherein a swelling ratio of the organic adhesive ranges from 50% to 200%, the swelling ratio being a ratio of a volume of the organic adhesive placed in electrolyte to a volume of the dried organic adhesive.

11. The expansion tape according to any one of claims 1 to 10, wherein a glass transition temperature of the organic adhesive ranges from -20°C to 60°C.

12. The expansion tape according to any one of claims 1 to 11, wherein an initial expansion temperature of the temperature expansion material ranges from 70°C to 130°C, and optionally from 80°C to 110°C.

13. The expansion tape according to any one of claims 1 to 12, wherein the organic adhesive comprises at least one of an acrylate adhesive, a methyl methacrylate adhesive, an acrylic adhesive, an ethylene vinyl acetate adhesive, and a polypropylene adhesive, and optionally comprises an acrylate adhesive.

14. The expansion tape according to any one of claims 1 to 13, wherein the temperature expansion material comprises at least one of expansion microspheres and polyurethane, and optionally comprises expansion microspheres.

15. The expansion tape according to any one of claims 1 to 14, wherein a material of the substrate comprises at least one of polyethylene terephthalate, polyimide, polypropylene, and polyethylene.

16. The expansion tape according to any one of claims 1 to 15, wherein the primer layer comprises at least one of modified polypropylene, styrene-isoprene-styrene block copolymer, and hydrogenated styrene-butadiene-styrene block copolymer.

17. The expansion tape according to any one of claims 1 to 16, wherein the expansion tape further comprises:
an oriented polystyrene layer provided on a surface of the expansion layer away from the substrate;
optionally, a ratio of a thickness of the oriented polystyrene layer to a thickness of the expansion tape is less than or equal to 20:100, and optionally (5-20):100; and
optionally, the thickness of the oriented polystyrene layer ranges from 15 µm to 90 µm, and more optionally from 25 µm to 50 µm.

18. A preparation method of expansion tape for battery packaging, comprising the following steps of preparing the expansion tape according to any one of claims 1 to 17:
preparing an expansion layer on one surface of a substrate; and
preparing a primer layer on a surface of the substrate away from the expansion layer.

19. The preparation method of expansion tape according to claim 18, wherein the step of preparing an expansion layer comprises:
preparing a slurry precursor by mixing a raw material of an organic adhesive and a temperature expansion material;
curing the slurry precursor to prepare an expansion layer slurry; and
applying the expansion layer slurry onto the surface of the substrate.

20. The preparation method of expansion tape according to claim 19, wherein the preparation method of expansion tape satisfies at least one of conditions (1) and (2):
(1) a solid content of the expansion layer slurry ranges from 10% to 50%; and
(2) a viscosity of the expansion layer slurry ranges from 50 mPa·s to 500 mPa·s.

21. Use of the expansion tape according to any one of claims 1 to 17 in preparation of a battery.

22. A preparation method of secondary battery, comprising the following steps:
adhering the primer layer of the expansion tape according to any one of claims 1 to 17 to a surface of an electrode assembly;
placing the electrode assembly adhered with the expansion tape in a housing, and vacuum drying the resulting product at 70°C to 130°C to cause the expansion tape to undergo primary expansion;
closing the housing; and
injecting an electrolyte into the closed housing such that the expansion tape that has undergone primary expansion absorbs the electrolyte to undergo secondary expansion.

23. A secondary battery, comprising:
a housing, wherein the housing is filled with an electrolyte;
an electrode assembly provided in the housing; and
the expansion tape according to any one of claims 1 to 17 provided between the housing and the electrode assembly and filling a gap between the housing and the electrode assembly, the primer layer of the expansion tape being adhered to a surface of the electrode assembly.

24. A battery module, comprising the secondary battery according to claim 23.

25. A battery pack, comprising the battery module according to claim 24.

26. An electric apparatus, comprising at least one selected from the secondary battery according to claim 23, the battery module according to claim 24, or the battery pack according to claim 25.
